# EUROPÄISCHE PATENTSCHRIFT

(11) **EP 2 631 525 B1**
(45) Veröffentlichungstag und Bekanntmachung des Hinweises auf die Patenterteilung: **08.02.2017**
(21) Anmeldenummer: 13000922.8
(22) Anmeldetag: 25.02.2013
(51) Int. Cl.: F16L 59/16, F16K 27/08

(54) **Abdichtvorrichtung**
Sealing device
Dispositif d'étanchéité

(30) Priorität: 25.02.2012 DE 202012001986 U; 01.06.2012 DE 202012005426 U
(43) Veröffentlichungstag der Anmeldung: 28.08.2013
(73) Patentinhaber: Kurzrock, Christian, 45731 Waltrop (DE)
(72) Erfinder: Kurzrock, Christian, 45731 Waltrop (DE)
(74) Vertreter: Behrendt, Arne

(56) Entgegenhaltungen:
- EP-A1- 0 235 314
- EP-A1- 0 473 118
- DE-B- 1 131 954
- DE-U- 1 996 340
- DE-U1- 20 307 427
- US-A- 4 142 543

## Beschreibung

Die Erfindung betrifft eine Vorrichtung zum Abdichten und zum Schutz der Betätigungsspindel einer wärmegedämmten Absperrarmatur für Kälteanlagen, mit einer die Spindel überdeckenden metallischen Schutzkappe, die mit dem die Spindel aufnehmenden Gehäuse der Absperrarmatur verschraubbar ist.

Eine derartige Vorrichtung ist beispielsweise aus der DE 1 996 340 U bekannt. Die bei dieser bekannten Vorrichtung verwendete metallische Schutzkappe hat die Aufgabe, etwaige Undichtigkeiten im Bereich der Spindelabdichtung zu beherrschen. Im Notfall muss diese Schutzkappe allerdings entfernt werden können, damit die von ihr abgedeckte Spindel sofort betätigt werden kann. Das ist insbesondere an Kälteanlagen mit Temperaturen von weniger als -40°C schwierig, weil die metallische Schutzkappe sich mit einem dicken Eispanzer überzieht, der abgeschlagen werden muss, ehe die metallische Schutzkappe zum Abschrauben zugänglich ist. Die in der Regel aus blechummanteltem Ortschaum bestehende bauseitige Isolierung der Armatur kann nach dem Stand der Technik nicht über die metallische Schutzhaube geführt werden, weil diese frei zugänglich bleiben muss, um im Notfall schnell die Spindel betätigen zu können. Hinzu kommt, dass sichergestellt werden muss, dass an der Spindel austretendes Kältemittel, z. B. NH₃ (Ammoniak) unkontrolliert freigesetzt wird oder in die Wärmedämmung eindringt und dort kondensiert, was zu nachhaltigen Schäden führen kann.

Aus der EP-A-473 118 ist es auch bekannt, an Stelle einer metallischen Schutzkappe eine Schutzkappe aus einem Kunststoff mit geringer Wärmeleitfähigkeit zu verwenden. Solche Kunststoffmaterialien erreichen aber bei Weitem nicht die für die Notfallabdichtung erforderliche Festigkeit, insbesondere weil solche Materialien bei extrem niedrigen Temperaturen erheblich stärker verspröden, als jedes Metall.

Es ist deshalb Aufgabe der Erfindung, die Vorrichtung der eingangs genannten Art dahingehend weiterzubilden, dass die metallische Schutzkappe unabhängig von der Wärmedämmung der Armatur eisfrei gehalten wird und dennoch die von der Schutzkappe abgedeckte Spindel problemlos zugänglich ist.

Zur Lösung dieser Aufgabe schlägt die Erfindung eine Vorrichtung mit den Merkmalen des Patentanspruches 1 vor.

Diese Vorrichtung gemäß der Erfindung sieht erstmalig eine die Spindel abdeckende metallische Schutzkappe vor, die mit einer eigenen, gesonderten Wärmedämmung versehen ist, die sich lückenlos an die bauseitige Wärmedämmung der Armatur anschließt. Auf diese Weise kann erstmalig sichergestellt werden, dass sich die Schutzkappe nicht unkontrolliert mit Eis überzieht. Außerdem kann nicht ungewollt Kältemittel oder Kondenswasser in die bauseitige Wärmedämmung der Armatur eindringen.

Erfindungsgemäß ist diese gesonderte wärmedämmende Umhüllung der metallischen Schutzkappe als Integralschaumkörper mit hochverdichteter Außenhaut ausgebildet ist, in den die metallische Schutzkappe eingebettet ist.

Dieser Integralschaumkörper bildet mit der metallischen Schutzkappe ein Verbundbauteil, welches eine gemeinsame Handhabung von metallischer Schutzkappe und deren Wärmedämmung ermöglicht, was insbesondere in Notfallsituationen vorteilhaft ist.

Damit bei dieser gemeinsamen Handhabung von metallischer Schutzkappe und deren Wärmedämmung das für das An- und Abschrauben erforderliche Drehmoment problemlos auf das Schraubgewinde der metallischen Schutzkappe übertragen werden kann, ist weiterhin vorgesehen, dass der Integralschaumkörper mit einer Drehmomentverteilplatte versehen ist, die durch Verkrallungselemente mit dem Integralschaumkörper verbunden ist und Mittel zur Einleitung des für das An- und Abschrauben der metallischen Schutzkappe erforderlichen Drehmomentes aufweist. Als Mittel zur Einleitung des Drehmomentes in die Drehmomentverteilplatte ist ein Sechskantantrieb vorgesehen, der drehfest mit der Drehmomentverteilplatte verbunden ist.

Damit das Drehmoment besser von dem Integralschaumkörper auf die metallische Schutzkappe übertragen wird, ist die metallische Schutzkappe mit geeigneten Mitnehmern versehen, die in dem Integralschaumkörper eingebettet sind.

Eine alternative Lösung der oben formulierten Aufgabe enthält der Patentanspruch 2. Auch bei dieser Ausgestaltung der Wärmedämmung der metallischen Schutzkappe der Spindel ist ein lückenloser Anbau an die bauseitige Wärmedämmung gewährleistet.

Maßnahmen für eine vorteilhafte Weiterbildung der Lehre des Patentanspruchs 2 ergeben sich aus Patentanspruch 8.

Die dort beanspruchte zweiteilige Wärmedämmung der metallischen Schutzkappe lässt sich ebenfalls einfach handhaben, indem der Verschlussdeckel von der festen äußeren Hülle des Schaumstoffkörpers abgeschraubt wird, so dass das aus dem Schaumstoffkörper herausragende Ende der metallischen Schutzkappe mit seinen dort befindlichen Werkzeugansatzflächen zugänglich ist und ohne Weiteres abgeschraubt werden kann.

Damit bei dieser Ausführungsform der Verschlussdeckel schnell und ohne weitere Hilfsmittel abgeschraubt werden kann, ist weiterhin vorgesehen, dass der Verschlussdeckel einen radial überstehenden, mit Schutzhandschuhen ergreifbaren Rand aufweist.

Auch bei dieser Ausführungsform der Erfindung ist für einen lückenlosen Anschluss an die bauseitige Wärmedämmung der Armatur gesorgt. Zu diesem Zweck hat die feste äußere Hülle einen Stützkranz für die Anlage an der Wärmedämmung der Absperrarmatur. Durch diesen Stützkranz wird sichergestellt, dass die metallische Schutzkappe mitsamt Wärmedämmung problemlos von der bauseitigen Wärmedämmung der Armatur abgenommen werden kann und an diese wieder angesetzt werden kann.

Bei beiden Ausführungsformen der Erfindung ist schließlich die metallische Schutzkappe mit einer Sicherheits-Ausblasöffnung versehen, deren Auslass durch die wärmedämmende Umhüllung hindurchgeführt ist. Über diese Sicherheits-Ausblasöffnung kann kontrolliert Kühlmittel abgeblasen werden, welches sich unter der metallischen Schutzkappe angesammelt haben könnte. Das Ausblasende dieser Sicherheitsausblasöffnung liegt im Bereich der wärmedämmenden Umhüllung der metallischen Schutzkappe, so dass auch auf diesem Weg kein Kältemittel in die bauseitige Wärmedämmung der Absperrarmatur gelangen kann.

Zwei Ausführungsbeispiele der Erfindung werden im Folgenden anhand der Zeichnung näher erläutert. Es zeigen:
- Fig. 1:: Perspektivisch ein erstes Ausführungsbeispiel der Vorrichtung gemäß der Erfindung;
- Fig. 2:: perspektivisch und in einem axialen Schnitt das Ausführungsbeispiel gemäß Figur 1, allerdings um 180° um eine vertikale Achse verdreht;
- Fig. 3:: perspektivisch eine zweite Ausführungsform der Vorrichtung gemäß der Erfindung;
- Fig. 4:: das Ausführungsbeispiel gemäß Figur 3 perspektivisch und in einem axialen Schnitt.

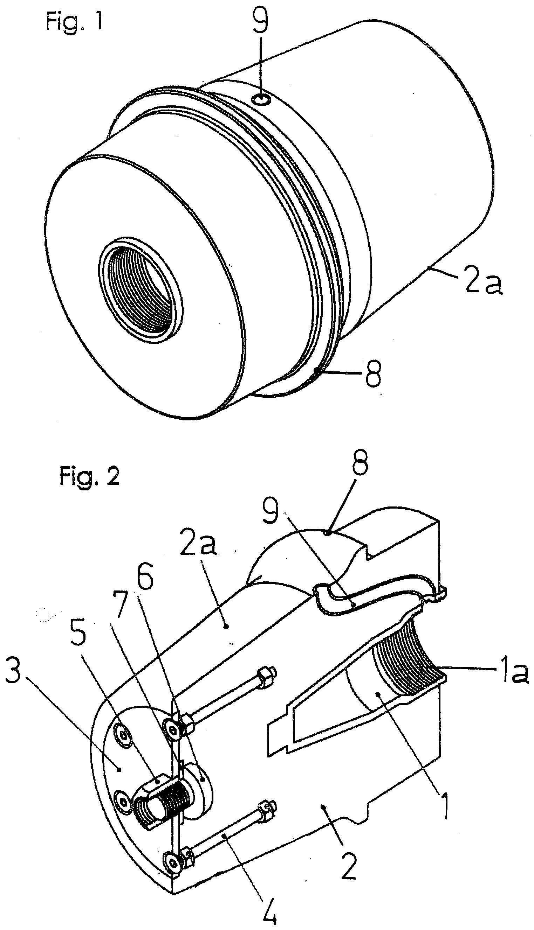

In Figur 1 ist eine metallische Schutzkappe mit dem Bezugszeichen 1 bezeichnet. Diese metallische Schutzkappe 1 ist mit einem Gewinde 1 a versehen, welches dichtend auf ein nicht dargestelltes, wärmegedämmtes Gehäuse einer Absperrarmatur derart aufschraubbar ist, dass eine aus dem Gehäuse austretende Betätigungsspindel von dieser Schutzkappe abgedeckt wird.

Die metallische Schutzkappe 1 ist in einen wärmedämmenden Integralschaumkörper 2 eingebettet, der zur Steigerung seiner Stabilität eine hochverdichtete Außenhaut 2a aufweist. Dieser Integralschaumkörper 2 ist an seiner dem Gewinde 1a abgewandten Seite mit einer aus Edelstahl bestehenden Drehmomentverteilplatte 3 versehen, die durch Verkrallungselemente 4 mit dem Integralschaumkörper 2 verbunden ist. Die Verkrallungselemente 4 bestehen aus Schrauben, die in den Integralschaumkörper 2 eingebettet sind und mit der Drehmomentverteilplatte 3 verschraubt sind.

Die Drehmomentverteilplatte 3 ist mittig mit einem Sechskant-Antrieb 5 versehen, der zur Einleitung von Drehmomenten dient, welche über die Drehmomentverteilplatte 3, die Verkrallungselemente 4 und den Integralschaumkörper 2 auf die metallische Schutzkappe 1 bzw. deren Gewinde 1 a übertragen werden.

Außerdem ist die metallische Schutzkappe an ihrem Außenumfang mit nicht dargestellten Mitnehmern versehen, die in den Integralschaumkörper 2 eingebettet sind und für eine bessere Drehmomentübertragung zwischen dem Integralschaumkörper 2 und der metallischen Schutzkappe 1 sorgen.

Der aus Edelstahl bestehende Sechskant-Antrieb 5 ist mittels einer Schraube 6 und einer Konterscheibe 7 mit der Drehmomentverteilplatte 3 verschraubt.

Der Integralschaumkörper 2 hat einen solchen Durchmesser, dass durch die wärmedämmende Wirkung des Schaums Eis- und Kondensatbildungen an seiner Außenseite unterbunden werden. Durch die erhöhte Rohdichte im Bereich seiner Außenhaut können die auftretenden Kräfte und Momente beim An- und Abschrauben der Schutzkappe 1 zuverlässig auf die metallische Schutzkappe 1 übertragen werden.

An seinem Außenumfang ist der Integralschaumkörper 2 von einem Stützkranz 8 umgeben, der sich an der nicht dargestellten bauseitigen Wärmedämmung der Armatur abstützen soll und in diesem Bereich für einen lückenlosen Anschluss sorgen soll.

Weiterhin sind die metallische Schutzkappe 1 und der Integralschaumkörper 2 mit einer Sicherheits-Ausblasöffnung 9 versehen, über die kontrolliert Leckgas abgegeben werden kann, welches sich aufgrund von Undichtigkeiten im Bereich der Spindel unter der metallischen Schutzkappe 1 angesammelt haben könnte. Die Sicherheits-Ausblasöffnung 9 leitet dieses Leckgas kontrolliert nach außen, und zwar in einem Bereich, in dem es weder das Personal gefährden kann, noch unter die bauseitige Wärmedämmung der Armaturen gelangen kann.

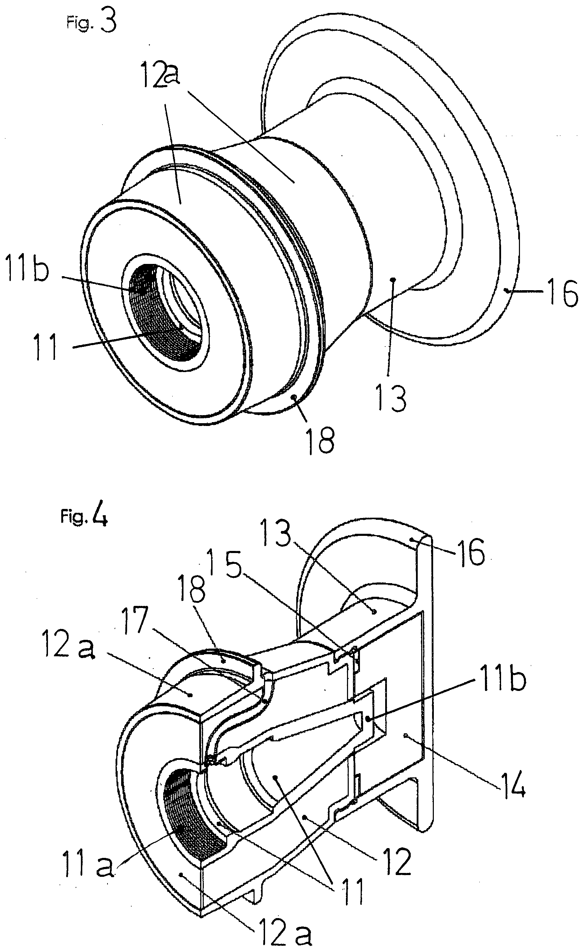

Beim Ausführungsbeispiel der Figuren 3 und 4 ist die metallische Schutzkappe mit dem Bezugszeichen 11 und deren Gewinde mit dem Bezugszeichen 11a bezeichnet. Die metallische Schutzkappe 11 wird hier von einem Schaumstoffkörper 12 umgeben, der eine äußere, feste Hülle 12a aus Metall oder Kunststoff aufweist und durch den die metallische Schutzkappe 11 derart hindurch ragt, dass ein an der metallischen Schutzkappe 11 angeformter, als Werkzeugansatz dienender Sechskant 11 b aus dem Schaumstoffkörper 12 herausragt und für ein Verdrehwerkzeug zugänglich ist.

Das offene Ende des Schaumstoffkörpers 12 wird von einem Verschlussdeckel 13 mit einem aus Hartschaum bestehenden Isolierkern 14 abgedeckt. Dieser Verschlussdeckel 13 ist mit der festen Hülle 12a des Schaumstoffkörpers 12 unter Zwischenlage eines Dichtringes 15 verschraubt und weist einen radial überstehenden Rand 16 auf, der zu Zwecken des Anschraubens bzw. Abschraubens des Verschlussdeckels 13 leicht mit Schutzhandschuhen ergriffen werden kann. Auch bei diesem zweiten Ausführungsbeispiel der Vorrichtung gemäß der Erfindung weist die äußere Hülle 12a des Schaumstoffkörpers 12 einen Stützkranz 18 für die Anlage an der bauseitigen Wärmedämmung der Armatur auf. Außerdem ist auch hier eine Sicherheits-Ausblasöffnung 17 vorgesehen, über die - ebenso wie beim vorangehend geschilderten Ausführungsbeispiel - etwaiges Leckgas kontrolliert abgeführt werden kann.

## Patentansprüche

1. Vorrichtung zum Abdichten und zum Schutz der Betätigungsspindel einer wärmegedämmten Absperrarmatur für Kälteanlagen, mit einer die Spindel überdeckenden metallischen Schutzkappe (1), die mit dem die Spindel aufnehmenden Gehäuse der Absperrarmatur verschraubbar ist, **dadurch gekennzeichnet, dass** die metallische Schutzkappe (1) von einem wärmedämmenden Schaumstoffkörper umgeben ist, der als Integralschaumkörper (2) mit hochverdichteter Außenhaut (2a) ausgebildet ist, wobei der Integralschaumkörper (2) an seiner Außenseite einen Stützkranz (8) für die Anlage an der bauseitigen Wärmedämmung der Abspannarmatur aufweist.

2. Vorrichtung zum Abdichten und zum Schutz der Betätigungsspindel einer wärmegedämmten Absperrarmatur für Kälteanlagen, mit einer die Spindel überdeckenden metallischen Schutzkappe (1), die mit dem die Spindel aufnehmenden Gehäuse der Absperrarmatur verschraubbar ist, **dadurch gekennzeichnet, dass** die metallische Schutzkappe (11) von einem wärmedämmenden Schaumstoffkörper (12) umgeben ist, der mit einer festen, äußeren Hülle (12 a) aus Metall oder Kunststoff versehen ist, die einen Stützkranz (18) für die Anlage an der bauseitigen Wärmedämmung der Absperrarmatur aufweist.

3. Vorrichtung nach Anspruch 1, **dadurch gekennzeichnet, dass** der Integralschaumkörper (2) mit der metallischen Schutzkappe (1) ein Verbundbauteil bildet.

4. Vorrichtung nach den Ansprüchen 1 und 3, **dadurch gekennzeichnet, dass** die metallische Schutzkappe (1) zusätzlich in den Integralschaumkörper (2) eingebettete Mitnehmer aufweist.

5. Vorrichtung nach den Ansprüchen 1,3 und 4 **dadurch gekennzeichnet, dass** der Integralschaumkörper (2) mit einer Drehmomentverteilplatte (3) versehen ist, die durch Verkrallungselemente (4) mit dem Integralschaumkörper (2) verbunden ist und Mittel zur Einleitung des für das An- und Abschrauben der metallischen Schutzkappe (1) erforderlichen Drehmomentes aufweist.

6. Vorrichtung nach Anspruch 5, **dadurch gekennzeichnet, dass** der Drehmomentverteilplatte (3) als Mittel zur Einleitung des Drehmomentes ein Sechskant-Antrieb (5) zugeordnet ist.

7. Vorrichtung nach Anspruch 1, **dadurch gekennzeichnet, dass** die metallische Schutzkappe (1) mit einer Sicherheits-Ausblasöffnung (9) versehen ist, deren Auslass durch den Integralschaumkörper (2) hindurchgeführt ist.

8. Vorrichtung nach Anspruch 2, **dadurch gekennzeichnet, dass** die metallische Schutzkappe (11) durch den Schaumstoffkörper (12) hindurchragt und mit einem über den Schaumstoffkörper (12) vorstehenden Werkzeugansatz (11 b) versehen ist, der von einem isolierenden Verschlussdeckel (13) abgedeckt ist, der abdichtend auf die feste äußere Hülle (12 a) des Schaumstoffkörpers (12) aufschraubbar ist.

9. Vorrichtung nach Anspruch 8, **dadurch gekennzeichnet, dass** der Verschlussdeckel (13) einen radial überstehenden, mit Schutzhandschuhen ergreifbaren Rand (16) aufweist.

10. Vorrichtung nach Anspruch 2, **dadurch gekennzeichnet, dass** die metallische Schutzkappe (11) mit Sicherheit-Ausblasöffnungen (17) versehen ist, deren Auslass durch den Schaumstoffkörper (12) hindurchgeführt ist.

## Claims

1. Device for sealing and for protecting the actuating spindle of a heat-insulated shut-off valve for refrigerating plants, with a metal protective cap (1) which covers the spindle and is screwable to the spindle-accommodating housing of the shut-off valve, **characterized in that** the metal protective cap (1) is surrounded by a heat-insulating foam body which is designed as an integral foam body (2) with a highly compressed outer skin (2a), wherein the outer side of the integral foam body (2) has a supporting ring (8) for abutment against the on-site heat insulation of the shut-off valve.

2. Device for sealing and for protecting the actuating spindle of a heat-insulated shut-off valve for refrigerating plants, with a metal protective cap (1) which covers the spindle and is screwable to the spindle-accommodating housing of the shut-off valve, **characterized in that** the metal protective cap (11) is surrounded by a heat-insulating foam body (12) which is provided with a fixed outer casing (12a) which is made of metal or plastic and has a supporting ring (18) for abutment against the on-site heat insulation of the shut-off valve.

3. Device according to Claim 1, **characterized in that** the integral foam body (2) forms a composite component with the metal protective cap (1).

4. Device according to Claims 1 and 3, **characterized in that** the metal protective cap (1) additionally has drivers embedded in the integral foam body (2).

5. Device according to Claims 1, 3 and 4, **characterized in that** the integral foam body (2) is provided with a torque-distributing plate (3) which is connected to the integral foam body (2) by interlocking elements (4) and has means for introducing the torque required for screwing on and unscrewing the metal protective cap (1).

6. Device according to Claim 5, **characterized in that** the torque-distributing plate (3) is assigned a hexagon drive (5) as the means for initiating the torque.

7. Device according to Claim 1, **characterized in that** the metal protective cap (1) is provided with a safety blow-out opening (9), the outlet of which is guided through the integral foam body (2).

8. Device according to Claim 2, **characterized in that** the metal protective cap (11) projects through the foam body (12) and is provided with a tool application portion (11b) which protrudes over the foam body (12) and is covered by an insulating closure cover (13) which can be screwed in a sealing manner onto the fixed outer casing (12a) of the foam body (12).

9. Device according to Claim 8, **characterized in that** the closure cover (13) has a radially protruding edge (16) which can be grasped with protective gloves.

10. Device according to Claim 2, **characterized in that** the metal protective cap (11) is provided with safety blow-out openings (17), the outlet of which is guided through the foam body (12).

## Revendications

1. Dispositif d'étanchéité et de protection de la broche d'actionnement d'un appareil de sectionnement calorifugé pour des installations frigorifiques, avec un capuchon de protection métallique (1) recouvrant la broche, qui peut être vissé sur le corps de l'appareil de sectionnement contenant la broche, **caractérisé en ce que** le capuchon de protection métallique (1) est entouré d'un corps de mousse de calorifugeage, qui est formé par un corps de mousse intégral (2) avec une peau extérieure hautement comprimée (2a), dans lequel le corps de mousse intégral (2) présente sur son côté extérieur une couronne de support (8) pour l'appui sur le calorifugeage de construction de l'appareil de sectionnement.

2. Dispositif d'étanchéité et de protection de la broche d'actionnement d'un appareil de sectionnement calorifugé pour des installations frigorifiques, avec un capuchon de protection métallique (1) recouvrant la broche, qui peut être vissé sur le corps de l'appareil de sectionnement contenant la broche, **caractérisé en ce que** le capuchon de protection métallique (11) est entouré d'un corps de mousse de calorifugeage (12), qui est muni d'une douille extérieure solide (12a) en métal ou en matière plastique, qui présente une couronne de support (18) pour l'appui sur le calorifugeage de construction de l'appareil de sectionnement.

3. Dispositif selon la revendication 1, **caractérisé en ce que** le corps de mousse intégral (2) forme une pièce composite avec le capuchon de protection métallique (1).

4. Dispositif selon les revendications 1 et 3, **caractérisé en ce que** le capuchon de protection métallique (1) présente en outre des éléments d'entraînement noyés dans le corps de mousse intégral (2).

5. Dispositif selon les revendications 1, 3 et 4, **caractérisé en ce que** le corps de mousse intégral (2) est doté d'une plaque de distribution de couple de rotation (3), qui est assemblée au corps de mousse intégral (2) par des éléments d'accrochage (4) et qui présente des moyens pour introduire le couple de rotation nécessaire pour visser et dévisser le capuchon de protection métallique (1).

6. Dispositif selon la revendication 5, **caractérisé en ce qu'**un entraînement à six pans (5) est associé à la plaque de distribution du couple de rotation (3) en tant que moyen pour introduire le couple de rotation.

7. Dispositif selon la revendication 1, **caractérisé en ce que** le capuchon métallique (1) est doté d'une ouverture de soufflage de sécurité (9), dont la sortie est menée à travers le corps de mousse intégral (2).

8. Dispositif selon la revendication 2, **caractérisé en ce que** le capuchon de protection métallique (1) traverse le corps de mousse (12) et est doté d'une prise d'outil (11b) saillante au-delà du corps de mousse (12), qui est recouverte par un couvercle de fermeture isolant (13), qui peut être vissé de façon étanche sur la douille extérieure solide (12a) du corps de mousse (12).

9. Dispositif selon la revendication 8, **caractérisé en ce que** le couvercle de fermeture (13) présente un bord saillant radialement (16), pouvant être saisi avec des gants de protection.

10. Dispositif selon la revendication 2, **caractérisé en ce que** le capuchon de protection métallique (11) est doté d'ouvertures de soufflage de sécurité (17), dont la sortie est menée à travers le corps de mousse (12).
